# EUROPÄISCHE PATENTSCHRIFT

(11) **EP 0 620 626 B1**
(45) Veröffentlichungstag und Bekanntmachung des Hinweises auf die Patenterteilung: **18.06.1997**
(21) Anmeldenummer: 94105580.8
(22) Anmeldetag: 11.04.1994
(51) Int. Cl.: H02B 13/025

(54) **Schaltzellenanordnung, insbesondere für Mittelspannungsanlagen**
Switching cell device, especially for medium voltage einstallations
Dispositif de cellule de commutation, notamment pour des installations moyenne tension

(30) Priorität: 13.04.1993 DE 4312022
(43) Veröffentlichungstag der Anmeldung: 19.10.1994
(73) Patentinhaber: GEC ALSTHOM T&D GmbH CONCORDIA SPRECHER MITTELSPANNUNGSTECHNIK, 70794 Filderstadt (DE)
(72) Erfinder: Paulsen, Jörg, D-70794 Filderstadt (DE)
(74) Vertreter: Finsterwald, Manfred, Dipl.-Ing., Dipl.-Wirtsch.-Ing.

(56) Entgegenhaltungen:
- WO-A-91/03089
- DE-U- 7 509 085
- FR-A- 2 579 032

## Beschreibung

Die Erfindung betrifft eine Schaltzellenanordnung, insbesondere für Mittelspannungs-Schaltanlagen, nach dem Oberbegriff des Anspruchs 1. Weiterhin ist die Erfindung auf eine Schaltzellenanordnung nach dem Oberbegriff des Anspruches 2 gerichtet.

Schaltzellenanordnungen bestehen üblicherweise aus mehreren aneinandergrenzend angeordneten Schaltzellen bzw. Schaltschränken oder auch aus einzelnen Schaltschränken mit mehreren gegeneinander abgeschotteten Zellenabschnitten. In den einzelnen Zellen sind im allgemeinen elektrische Schalt-, Steuer- und gegebenenfalls Regelgeräte vorgesehen, und diese Schaltschränke müssen so ausgebildet sein, daß sie im Falle eines Störlichtbogens und einer dadurch erzeugten Druckerhöhung nicht beschädigt und insbesondere auch davorstehende Personen nicht gefährdet werden.

Um eine entsprechende Druckfestigkeit zu erzielen, ist es bekannt, den jeweiligen Schaltschrank ringsum mechanisch entsprechend stabil auszubilden und für die Schaltschranktür entsprechende Verriegelungen vorzusehen. Um einen Abbau des sich im Falle eines Störlichtbogens in einer Zelle ergebenden plötzlichen Druckanstiegs zu ermöglichen, ist es bekannt, Schaltschränke dieser Art mit an der oberen Abschlußwandung gelegenen Druckentlastungsklappen auszurüsten, die im Falle einer Druckerhöhung geöffnet werden und den durch den Störlichtbogen hervorgerufenen Gasen einen Austritt ins Freie gestatten.

Sind mehrere Zellen aneinander angrenzend angeordnet, so kann im Störungsfall, das heißt bei Auftreten eines Lichtbogens in einer Zelle, durch die von der dabei entstehenden Druckwelle ausgelöste Sogwirkung zwischen den Druckentlastungsklappen und der Raumdecke die Druckentlastungsklappe einer an die vom Störfall betroffene Zelle angrenzenden Nachbarzelle angehoben werden. Dadurch wird die deckenseitige Öffnung der Nachbarzelle freigelegt, so daß eine aufgrund des Störlichtbogens in der betroffenen Zelle entstehende Heiße ionisierte Gaswolke aus der betroffenen Zelle austreten, in die Nachbarzelle eindringen und dort einen Überschlag verursachen kann. Auf diese Weise können bei Auftreten eines Lichtbogens in einer Zelle mehrere aneinander angrenzend angeordnete Zellen beschädigt und auch zerstört werden.

Weiterhin kann sich die heiße ionisierte Gaswolke, die durch die deckenseitige Öffnung der betroffenen Zelle austritt, über die Seitenbegrenzungen der Zelle hinaus und insbesondere auch zur Vorderseite der Zelle hin ausbreiten und dabei zu einer erheblichen Gefährdung von Personen führen.

In der FR-A-2 579 032 ist eine Schaltzellenanordnung für Mittelspannungsschaltanlagen beschrieben, bei der die einzelnen Zellen der Schaltzellenanordnung deckenseitig verschwenkbar gelagerte Druckentlastungsklappen besitzen. Die von den Druckentlastungsklappen bedeckten Öffnungen in den Zellen münden in einen Druckentlastungsraum, so daß bei Auftreten einer Störung in einer Zelle die durch den Lichtbogen entstehenden heißen, ionisierten Gase aus der betroffenen Zelle austreten und in den Druckentlastungsraum eintreten können. Die in den Druckentlastungsraum eintretenden Gase werden dann über eine Öffnung an die Umgebung abgegeben.

Aus der WO-A-91 03 089 ist eine Schaltzellenanordnung für Mittelspannungsschaltanlagen bekannt, bei der ebenfalls bei Auftreten einer Störung in einer Zelle die heißen, ionisierten Gase über Druckentlastungsklappen in Druckentlastungsräume austreten können. Von den Druckentlastungsräumen können die Gase dann ins Freie oder in einen Auffangraum geführt werden, wo sie abgesogen und unschädlich gemacht werden können.

In der DE-U-7 509 085 ist eine Schaltzellenanordnung für Mittelspannungsschaltanlagen beschrieben, bei der die Rückseiten der Zellen als Druckentlastungsklappen ausgebildet sind. Im Falle einer Störung innerhalb einer Zelle werden die Rückwandteile nach hinten aufgebogen, so daß eine sich über die gesamte Bauhöhe der Zelle erstreckende Entlastungsöffnung erzeugt wird. Auf diese Weise wird erreicht, daß die entstehende Druckwelle unabhängig von Ihrem Ausgangsort stets nur einen kleinen Weg bis zur Entlastungsöffnung zurücklegen muß, wodurch ein rascher Druckabbau erfolgen kann.

Aufgabe der Erfindung ist es, eine Schaltzellenanordnung von der in den Oberbegriffen der Patentansprüche 1 und 2 definierten Art so zu verbessern, daß bei Auftreten eines Störlichtbogens in einer Zelle oder in einem Zellenabschnitt ein Übergreifen der Störung auf benachbarte Zellen und insbesondere ein Eindringen einer durch den Störlichtbogen in der betroffenen Zelle hervorgerufenen heißen ionisierten Gaswolke in benachbarte Zellen verhindert wird.

Gelöst wird diese Aufgabe nach der Erfindung durch die Merkmale der unabhängigen Ansprüche 1 oder 2.

Durch die erfindungsgemäße Anordnung der Druckentlastungsklappen wird bei nebeneinander angeordneten Zellen erreicht, daß bei einer Störung in einer Zelle deren schwenkachsenseitig benachbarte Zelle von der aufschwenkenden Druckentlastungsklappe der von der Störung betroffenen Zelle geschützt wird, so daß eine aus der betroffenen Zelle austretende, heiße ionisierte Gaswolke nicht in die schwenkachsenseitig angrenzende Nachbarzelle eintreten kann und dort einen Überschlag auslöst, wodurch diese Nachbarzelle beschädigt oder zerstört wird.

Gleichzeitig kann die Druckentlastungsklappe der auf der gegenüberliegenden Seite der betroffenen Zelle angeordneten Nachbarzelle nicht an ihrem zur betroffenen Zelle hin gelegenen Ende durch den zwischen den Druckentlastungsklappen und der Raumdecke auftretenden Sog angehoben werden, da sie an diesem Ende angelenkt ist. Dadurch wird auch das Eindringen der in der betroffenen Zelle entstehenden heißen ionisierten Gaswolke in diese Nachbarzelle verhindert.

Darüber hinaus wird die Druckentlastungsklappe dieser Nachbarzelle durch den Sog um einen bestimmten Winkel verschwenkt, so daß sie als Ablenkklappe für die Gaswolke wirkt. Eine auf die verschwenkte Druckentlastungsklappe auftreffende Gaswolke wird in Richtung der Raumdecke reflektiert, so daß ein direktes Eintreten der Gaswolke von der betroffenen Zelle über die Nachbarzelle hinaus in den Bereich vor die Zellenanordnung verhindert wird.

Nach einer vorteilhaften Ausführungsform der Erfindung weisen bei nebeneinander und gleichzeitig hintereinander angeordneten Zellen zumindest solche Zellen, die sowohl mindestens eine seitliche als auch eine hintere Nachbarzelle besitzen, jeweils zwei Druckentlastungsklappen auf. Die Zellen sind dabei so nebeneinander und hintereinander angeordnet, daß im verschlossenen Zustand jeweils die Schwenkachse jeder Druckentlastungsklappe einer Zelle dem freien Ende einer Druckentlastungsklappe der schwenkachsenseitig benachbarten Zelle zugewandt ist.

Durch diese erfindungsgemäße Ausbildung und Anordnung der Zellen kann auch bei nebeneinander und gleichzeitig hintereinander angeordneten Zellen eine bei einer Störung auftretende heiße ionisierte Gaswolke weder in eine seitliche noch in eine hintere Nachbarzelle der betroffenen Zelle eindringen. Wahlweise können dabei auch die Zellen, die nur eine seitliche oder nur eine hintere Nachbarzelle besitzen, mit zwei Druckentlastungsklappen versehen sein.

Nach einer weiteren bevorzugten Ausführungsform ist eine weitere verschwenkbar gelagerte Klappe deckenseitig, insbesondere auf einem Niederspannungsabschnitt der Zelle, angeordnet, wobei die Schwenkachse dieser Klappe dem freien Ende der Druckentlastungsklappe zugewandt angeordnet ist, so daß die Klappe bei einer Störung in der Zelle durch den auftretenden Sog angehoben wird und als Ablenkklappe für eine durch einen Störlichtbogen entstandene heiße ionisierte Gaswolke wirkt.

Durch die Anordnung einer zusätzlichen, verschwenkbar gelagerten Klappe kann auch im Falle einer Störung in einer an der Außenseite einer Schaltzellenanordnung angeordneten Zelle das Ablenken einer aus dieser Zelle austretenden Gaswolke in Richtung der Raumdecke gewährleistet werden, so daß die Sicherheit einer solchen Anordnung weiter erhöht wird. Vorteilhaft ist dabei die Ablenkklappe auf einem höheren Niveau als die benachbarte Druckentlastungsklappe angeordnet, wodurch die Ablenkeigenschaft auch für steil aus der von der Störung betroffenen Zelle austretende Gaswolken verbessert wird.

Die wesentlichen Vorteile der Erfindung bestehen darin, daß bei Auftreten einer Störung in einer Zelle eine durch einen Störlichtbogen erzeugte, aus dieser Zelle austretende heiße ionisierte Gaswolke nicht in eine angrenzend angeordnete Zelle eindringen, in der angrenzenden Zelle einen Überschlag verursachen und damit diese Zelle zerstören kann, und daß durch die Verwendung einer Druckentlastungsklappe oder einer zusätzlichen Klappe als Ablenkklappe für eine bei einer Störung auftretende Gaswolke die Gefahr der Verletzung von sich im Bereich der Schaltzellenanordnung befindenden Personen oder der Zerstörung von Gegenständen verringert wird.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnung näher erläutert; in dieser zeigt:
- Figur 1: eine schematische Darstellung einer zellenanordnung nach dem Stand der Technik bei Auftreten einer Störung in einer Zelle,
- Figur 2: eine schematische Draufsicht auf eine dungsgemäß ausgebildete Schaltzellenanordnung, x
- Figur 3: eine schematische Seitenansicht der zellenanordnung nach Figur 2 bei Auftreten einer Störung in einer Zelle,
- Figur 4: eine schematische Draufsicht auf eine weitere Ausführungsform einer erfindungsgemäß ausgebildeten Schaltzellenanordnung, und
- Figur 5: eine schematische Seitenansicht einer weiteren erfindungsgemäß ausgebildeten Schaltzellenanordnung bei Auftreten einer Störung in einer Zelle.

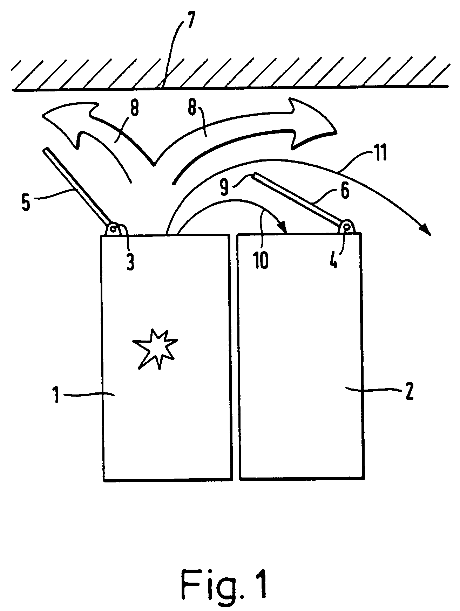

Figur 1 zeigt eine Schaltzellenanordnung nach dem Stand der Technik, die zwei Zellen 1, 2 umfaßt, welche benachbart und aneinandergrenzend angeordnet sind. An den Zellen 1, 2 sind deckenseitig über Schwenkachsen 3, 4 Druckentlastungsklappen 5, 6 angelenkt, die im Normalbetrieb der Schaltzellenanordnung im wesentlichen waagrecht auf der Oberseite der jeweiligen Zelle 1, 2 aufliegen.

Durch eine plötzlich auftretende, von einer angedeutet dargestellten Störung in Zelle 1 verursachte Druckerhöhung wird die Druckentlastungsklappe 5 in die in Figur 1 gezeigte Stellung zurückgeschwenkt. Gleichzeitig entsteht durch die Druckerhöhung im Bereich zwischen den Druckentlastungsklappen 5, 6 und der Raumdecke 7 ein Sog 8, der auf die Druckentlastungsklappe 6 wirkt, wodurch das freie Ende 9 der Druckentlastungsklappe 6 angehoben wird.

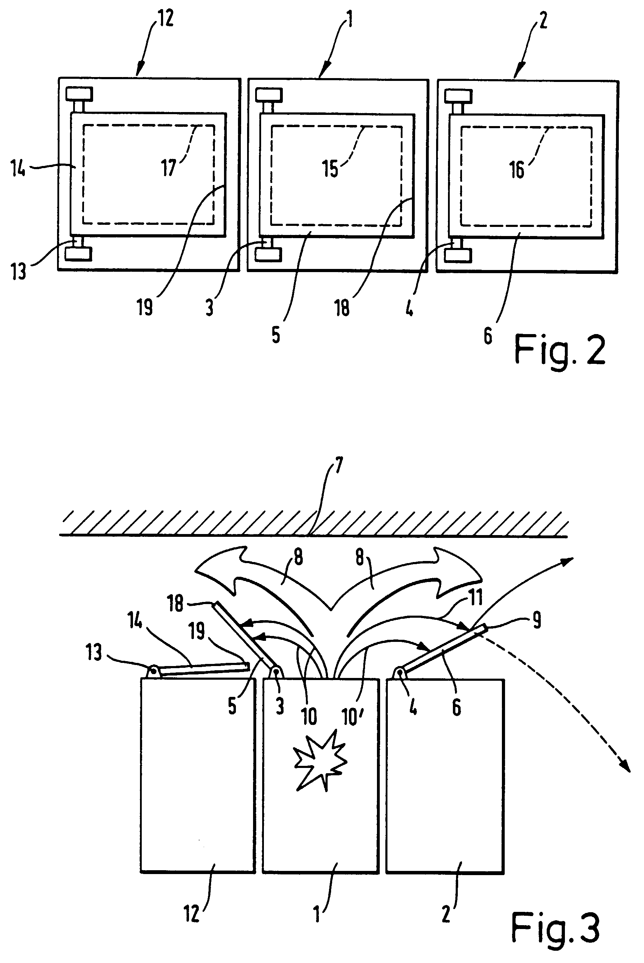

Eine in der Zelle 1 aufgrund eines Störlichtbogens entstehende, durch einen Pfeil 10 angedeutete heiße ionisierte Gaswolke tritt durch eine deckenseitig vorgesehene Öffnung 15 (Figur 2) aus der Zelle 1 aus und durch eine von der angehobenen Druckentlastungsklappe 6 nicht mehr abgedeckte Öffnung 16 (Figur 2) der Zelle 2 in diese ein. Ein weiterer durch einen Pfeil 11 dargestellter Teil der aus der Zelle 1 austretenden Gaswolke überquert die Zelle 2 und gelangt zu dem vor der Zelle 2 gelegenen Bereich. Personen, die sich in diesem Bereich befinden, können durch diese heiße ionisierte Gaswolke 11 verletzt werden.

Figur 2 zeigt die Draufsicht auf eine erfindungsgemäß ausgebildete Schaltzellenanordnung, welche drei Zellen 1, 2 und 12 umfaßt. Die an den Schwenkachsen 3, 4 und 13 verschwenkbar gelagerten Druckentlastungsklappen 5, 6, 14 verschließen deckenseitig in den Zellen 1, 2 und 12 vorgesehene Öffnungen 15, 16 und 17.

Die Schwenkachsen 3, 4 und 13 sind im wesentlichen parallel zueinander angeordnet. Die Zellen 1, 2 und 3 sind so nebeneinander angeordnet, daß die Schwenkachse 4 dem freien Ende 18 der Druckentlastungsklappe 5 und die Schwenkachse 3 dem freien Ende 19 der Druckentlastungsklappe 14 zugewandt ist.

Figur 3 zeigt die Funktion einer erfindungsgemäß ausgebildeten Schaltzellenanordnung bei Auftreten einer Störung in Zelle 1. Durch den plötzlich aufgrund der Störung in der Zelle 1 ansteigenden Druck wird die Druckentlastungsklappe 5 in die in Figur 3 gezeigte Stellung verschwenkt. Die Druckentlastungsklappe 5 schirmt, insbesondere nach einer vollständigen Verschwenkung in Richtung der Zelle 12, die Zelle 12 gegen die aus der Zelle 1 austretenden Gaswolken 10 ab, so daß die Gaswolken 10 nicht in das Innere der Zelle 12 eintreten können.

Der aufgrund der Druckerhöhung entstehende Sog 8 im Bereich zwischen der Druckentlastungsklappe 6 und der Raumdecke 7 hebt das freie Ende 9 der Druckentlastungsklappe 6 in die gezeigte Stellung an, wodurch die Druckentlastungsklappe 6 zum einen das Eindringen der Gaswolke 10' in die Zelle 2 verhindert und zum anderen die Gaswolke 11 zur Raumdecke 7 hin ablenkt. Dadurch wird der gestrichelt dargestellte Verlauf der Gaswolke 11 und damit ein Eintritt der Gaswolke 11 in den Bereich vor die Schaltzellenanordnung vermieden.

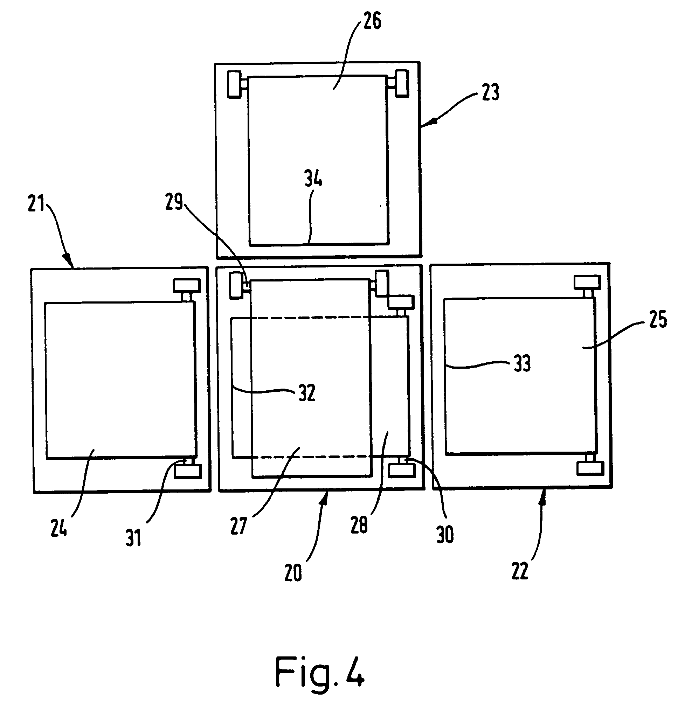

Figur 4 zeigt die Draufsicht auf eine erfindungsgemäß ausgebildete Schaltzellenanordnung, welche vier Zellen 20, 21, 22 und 23 umfaßt. Die Zellen 21, 22 und 23 weisen deckenseitig jeweils eine verschwenkbar gelagerte Druckentlastungsklappe 24, 25 und 26 auf. Die Zelle 20, die sowohl seitliche Nachbarzellen 21, 22 als auch eine hintere Nachbarzelle 23 besitzt, weist deckenseitig zwei sich im wesentlichen vollständig überlappende Druckentlastungsklappen 27, 28 auf, die an Schwenkachsen 29, 30 gelagert sind. Die Schwenkachsen 29, 30 sind im wesentlichen im rechten Winkel zueinander angeordnet, können aber auch einander gegenüberliegend, parallel zueinander verlaufend angeordnet sein.

Die Zellen 20, 21, 22 und 23 sind so nebeneinander und hintereinander angeordnet, daß die Schwenkachse 31 der Druckentlastungsklappe 24 dem freien Ende 32 der Druckentlastungsklappe 28, die Schwenkachse 30 der Druckentlastungsklappe 28 dem freien Ende 33 der Druckentlastungsklappe 25 und die Schwenkachse 29 der Druckentlastungsklappe 27 dem freien Ende 34 der Druckentlastungsklappe 26 zugewandt ist.

Durch diese erfindungsgemäße Anordnung wird bei einer Störung in der Zelle 20 sowohl die Zelle 23 durch die Druckentlastungsklappe 27 als auch die Zelle 22 durch die Druckentlastungsklappe 28 vor dem Eindringen einer heißen ionisierten Gaswolke geschützt. Gleichzeitig wirkt die Druckentlastungsklappe 24 als Ablenkklappe für die Gaswolke und verhindert somit sowohl das Eindringen der Gaswolke in die Zelle 21 als auch den Eintritt der Gaswolke in den Bereich vor der Zelle 21.

Auch eine Störung in einer der Zellen 21, 22 oder 23 führt nicht zu einem Eindringen einer Gaswolke in eine benachbarte Zelle, da bei einer Störung in der Zelle 21 die Druckentlastungsklappe 24 die benachbarte Zelle 20 vor dem Eindringen der Gaswolke schützt und bei einer Störung in einer der Zellen 22 oder 23 die Druckentlastungsklappen 28 bzw. 27 als Ablenkklappen wirken.

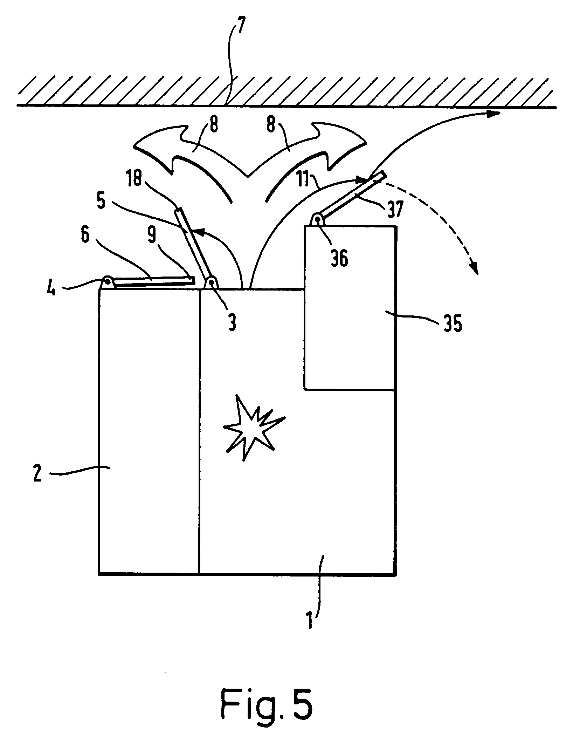

Figur 5 zeigt eine erfindungsgemäß ausgebildete Schaltzellenanordnung, bei der die Zellen 1, 2 als gegeneinander abgeschottete Zellenabschnitte eines Schaltschrankes ausgebildet sind. Im oberen, seitlichen Bereich der Zelle 1 ist ein derspannungsabschnitt 35 angeordnet, an dem deckenseitig an einer Schwenkachse 36 eine Klappe 37 verschwenkbar gelagert ist. Die Schwenkachse 36 ist im verschlossenen Zustand dem freien Ende 18 der die Zelle 1 verschließenden Druckentlastungsklappe 5 zugewandt, jedoch auf einem höheren Niveau als die Druckentlastungsklappe 5 angeordnet.

Bei einer Störung in der Zelle 1 wird durch den auftretenden Sog 8 die Klappe 37 nach oben verschwenkt, so daß sie als Ablenkklappe für eine aus der Zelle 1 austretende heiße ionisierte Gaswolke 11 wirkt. Dadurch wird diese zur Raumdecke 8 hin abgelenkt und gelangt nicht entlang des gestrichelt eingezeichneten Verlaufs in den Bereich vor der zellenanordnung.

Durch die erhöhte Anbringung der Ablenkklappe 37 ist ein besonders wirksamer Schutz des vor der Schaltzellenanordnung liegenden Bereiches gewährleistet. Gleichzeitig ist dadurch auch bei einer endseitig innerhalb einer Schaltzellenanordnung angeordneten Zelle ein wirksamer Schutz des vor der Zelle liegenden Bereiches gewährleistet.

## Patentansprüche

1. Schaltzellenanordnung, insbesondere für MittelspannungsSchaltanlagen, mit zumindest zwei benachbart und aneinandergrenzend angeordneten, jeweils einen Schalter enthaltenden Zellen (1, 2, 12), die deckenseitig durch verschwenkbar gelagerte Druckentlastungsklappen (5, 6, 14) verschlossen sind, wobei die Schwenkachsen (3, 4, 13) der Druckentlastungsklappen (5, 6, 14) im wesentlichen parallel zueinander angeordnet sind und jeweils im verschlossenen Zustand die Schwenkachse (3, 4) der Druckentlastungsklappe (5, 6) einer Zelle (1, 2) dem freien Ende (19, 18) der Druckentlastungsklappe (14, 5) der schwenkachsenseitig benachbarten Zelle (12, 1) zugewandt ist,
dadurch **gekennzeichnet,**
daß die Druckentlastungklappen (5) jeweils in eine Abschirm-Stellung verschwenkbar sind, in der sie jeweils zumindest das freie Ende (19, 9) der Druckentlastungsklappe (14, 6) der schwenkachsenseitig benachbarten Zelle (12, 2) überdecken und dadurch jeweils ein Aufschwenken dieser Druckentlastungsklappe (14, 6) verhindern, so daß bei einer Störung in einer Zelle (1) die zur von der Störung betroffenen Zelle (1) schwenkachsenseitig benachbarte Zelle (12, 2) von der aufschwenkenden Druckentlastungsklappe (5) geschützt wird.

2. Schaltzellenanordnung, insbesondere für MittelspannungsSchaltanlagen, mit zumindest einer einen Schalter enthaltenden Zelle (20), die deckenseitig zumindest durch eine verschwenkbar gelagerte Druckentlastungsklappe (27) verschlossen ist,
dadurch **gekennzeichnet,**
daß die Zelle (20) zwei Druckentlastungsklappen (27, 28) aufweist, die sich im geschlossenen Zustand im wesentvollständig überlappen, und deren Schwenkachsen (29, 30) im wesentlichen im rechten Winkel zueinander angeordnet sind.

3. Schaltzellenanordnung nach Anspruch 2,
dadurch **gekennzeichnet,**
daß bei nebeneinander und gleichzeitig hintereinander angeordneten Zellen (20, 21, 22, 23) zumindest solche Zellen (20), die sowohl mindestens eine seitliche als auch eine hintere Nachbarzelle (21, 22, 23) besitzen, jeweils zwei Druckentlastungsklappen (27, 28) aufweisen, und
daß die Zellen (20, 21, 22, 23) so nebeneinander und hintereinander angeordnet sind, daß im verschlossenen Zustand jeweils die Schwenkachse (29, 30, 31) jeder Druckentlastungsklappe (27, 28, 24) einer Zelle (20, 21) dem freien Ende (34, 33, 32) einer Druckentlastungsklappe (26, 25, 28) der schwenkachsenseitig benachbarten Zelle (23, 22, 20) zugewandt ist.

4. Schaltzellenanordnung nach einem der vorhergehenden Ansprüche,
dadurch **gekennzeichnet,**
daß die Zellen (1, 2, 12, 20, 21, 22, 23) als gegeneinander abgeschottete Zellenabschnitte eines Schaltschrankes ausgebildet sind.

5. Schaltzellenanordnung nach einem der vorhergehenden Ansprüche,
dadurch **gekennzeichnet,**
daß die Druckentlastungsklappen (5, 6, 14, 24, 25, 26, 27, 28) verschiedener Zellen (1, 2, 12, 21, 22, 23, 20) im wesentlichen in der gleichen Ebene angeordnet sind.

6. Schaltzellenanordnung nach einem der vorhergehenden Ansprüche,
dadurch **gekennzeichnet,**
daß die Fläche der Druckentlastungsklappen (5, 6, 14, 24, 25, 26) jeweils lediglich einen Teil der Deckenfläche der Zellen (1, 2, 12, 21, 22, 23, 20) umfaßt.

7. Schaltzellenanordnung, insbesondere für MittelspannungsSchaltanlagen, mit zumindest einer einen Schalter enthaltenden Zelle (1), die deckenseitig durch zumindest eine verschwenkbar gelagerte Druckentlastungsklappe (5) verschlossen ist, insbesondere nach einem der vorhergehenden Ansprüche,
dadurch **gekennzeichnet,**
daß zusätzlich zu den Druckentlastungsklappen (5) eine weitere verschwenkbar gelagerte Klappe (37) deckenseitig, insbesondere auf einem Niederspannungsabschnitt (35) der Zelle (1) angeordnet ist, wobei die Schwenkachse (36) dieser Klappe (27) dem freien Ende (18) der benachbarten Druckentlastungsklappe (5) zugewandt angeordnet ist, so daß die Klappe (37) bei einer Störung in der Zelle (1) durch den auftretenden Sog (8) angehoben wird und als Ablenkklappe für einen Lichtbogen (11) wirkt.

8. Schaltzellenanordnung nach Anspruch 7,
dadurch **gekennzeichnet,**
daß die Ablenkklappe (37) auf einem höheren Niveau als die benachbarte Druckentlastungsklappe (5) angeordnet ist.

## Claims

1. Switching cell arrangement, in particular for medium voltage installations, comprising at least two adjacent cells (1, 2, 12) which are arranged directly alongside one another and which each contain a switch, with the cells being closed at the lid side by pivotally mounted pressure relief flaps (5, 6, 14), with the pivot axes (3, 4, 13) of the pressure relief flaps (5, 6, 14) being arranged substantially parallel to one another and with the pivot axes (3, 4) of the pressure relief flap (5, 6) of one cell (1, 2) being respectively positioned, in the closed state, adjacent to the free end (19, 18) of the pressure relief flap (14, 5) of the adjacent cell (12, 1) at the pivot axis side, characterised in that the pressure relief flaps (5) are each pivotable into a screening position in which they respectively cover over at least the free end (19, 9) of the pressure relief flap (14, 6) of the adjacent cell (12, 2) at the pivot axis side and thereby respectively prevent upward pivoting of this pressure relief flap (14, 6), so that with a fault in one cell (1) the cell (12, 2) adjacent the cell (1) effected by the fault at the pivot axis side is protected by the upwardly pivoting pressure relief flap (5).

2. Switching cell arrangement, in particular for medium voltage installations, comprising at least one cell (20) containing a switch and closed at the lid side by at least one pivotally journalled pressure relief flap (27), characterised in that the cell (20) has two pressure relief flaps (27, 28) which, in the closed state, substantially fully overlap and the pivot axes (29, 30) of which are arranged substantially at a right angle to one another.

3. Switching cell arrangement in accordance with claim 2, characterised in that with cells (20, 21, 22, 23) arranged alongside one another and at the same time behind one another, at least those cells (20) which have at least one side neighbouring cell and also one rear neighbouring cell (21, 22, 23) each have two pressure relief flaps (27, 28), and in that the cells (20, 21, 22, 23) are so arranged alongside one another and behind one another that in the closed state the pivot axis (29, 30, 31) of each pressure relief flap (27, 28, 24) of one cell (20, 21) is respectively adjacent the free end (34, 33, 32) of a pressure relief flap (26, 25, 28) of the adjacent cell (23, 22, 20) at the pivot axis side.

4. Switching cell arrangement in accordance with one of the preceding claims, characterised in that the cells (1, 2, 12, 20, 21, 22, 23) are formed as mutually partitioned cell sections of a switch cabinet.

5. Switching cell arrangement in accordance with one of the preceding claims, characterised in that the pressure relief flaps (5, 6, 14, 24, 25, 26, 27, 28) of different cells (1, 2, 12, 21, 22, 23, 20) are arranged substantially in the same plane.

6. Switching cell arrangement in accordance with one of the preceding claims, characterised in that the area of the pressure relief flaps (5, 6, 14, 24, 25, 26) respectively embrace only a part of the lid area of the cells (1, 2, 12, 21, 22, 23, 20).

7. Switching cell arrangement, in particular for medium voltage installations, comprising at least one cell (1) containing a switch and closed at the lid side by at least one pivotally journalled pressure relief flap (5), in particular in accordance with one of the preceding claims, characterised in that a further pivotally journalled flap (37) is provided at the lid side, in addition to the pressure relief flap (5), in particular on a low-voltage section (35) of the cell (1), with the pivot axis (36) of this flap (27) being arranged adjacent the free end (18) of the neighbouring pressure relief flap (5), so that the flap (37) is lifted with a fault in the cell (1) through the suction (8) which arises and acts as a deflection flap for an arc (11).

8. Switching cell arrangement in accordance with claim 7, characterised in that deflection flap (37) is arranged at a higher level than the adjacent pressure relief flap (5).

## Revendications

1. Dispositif de cellules de commutation, destiné en particulier à des installations de commutation moyenne tension, comportant au moins deux cellules (1, 2, 12) qui sont disposées au voisinage l'une de l'autre et l'une contre l'autre, qui contiennent chacune un interrupteur et qui sont fermées du côté supérieur par des volets (5, 6, 14) de détente de pression montés de façon pivotante, les axes de pivotement (3, 4, 13) des volets (5, 6, 14) de détente de pression étant disposés de manière à être sensiblement parallèles l'un à l'autre et l'axe de pivotement (3, 4) du volet (5, 6) de détente de pression de chacune des cellules (1, 2) étant, à l'état fermé, orienté vers l'extrémité libre (19, 18) du volet (14, 5) de détente de pression de la cellule (12, 1) voisine du côté de l'axe de pivotement,
caractérisé en ce que
les volets (5) de détente de pression peuvent être chacun mis en pivotement jusque dans une position de protection, dans laquelle ils recouvrent chacun au moins l'extrémité libre (19, 9) du volet (14, 6) de détente de pression de la cellule (12, 2) voisine du côté de l'axe de pivotement et empêchent ainsi chacun un pivotement vers le haut de ce volet (14, 6) de détente de pression, de telle sorte qu'en cas de dérangement dans une cellule (1), la cellule (12, 2) voisine, du côté de l'axe de pivotement, de la cellule (1) affectée par le dérangement, est protégée par le volet (5) de détente de pression pivotant vers le haut.

2. Dispositif de cellules de commutation, destiné en particulier à des installations moyenne tension, comportant au moins une cellule (20) contenant un interrupteur, qui est fermée du côté supérieur par un volet (27) de détente de pression monté de façon pivotante,
caractérisé en ce que
la cellule (20) présente deux volets (27, 28) de détente de pression qui, à l'état fermé, se chevauchent sensiblement complètement et dont les axes de pivotement (29, 30) sont disposés sensiblement à angle droit l'un par rapport à l'autre.

3. Dispositif de cellules de commutation selon la revendication 2,
caractérisé en ce que
dans le cas de cellules (20, 21, 22, 23) disposées les unes à côté des autres, et en même temps à la suite les unes des autres, au moins les cellules (20), qui sont dotées aussi bien au moins d'une cellule voisine latérale que d'une cellule voisine disposée derrière elle (21, 22, 23), présentent chacune deux volets (27, 28) de détente de pression et en ce que les cellules (20, 21, 22, 23) sont disposées les unes à côté des autres et les unes à la suite des autres, de façon telle qu'à l'état fermé, chaque axe de pivotement (29, 30, 31) de chaque volet (27, 28, 24) de détente de pression d'une cellule (20, 21) est orienté vers l'extrémité libre (34, 33, 32) d'un volet (26, 25, 28) de détente de pression de la cellule voisine (23, 22, 20) du côté de l'axe de pivotement.

4. Dispositif de cellules de commutation selon l'une des revendications précédentes,
caractérisé en ce que
les cellules (1, 2, 12, 20, 21, 22, 23) sont conformées en sections de cellules cloisonnées les unes par rapport aux autres d'une armoire de commutation.

5. Dispositif de cellules de commutation selon l'une des revendications précédentes,
caractérisé en ce que
les volets (5, 6, 14, 24, 25, 26, 27, 28) de détente de pression de différentes cellules (1, 2, 12, 21, 22, 23, 20) sont disposés sensiblement dans le même plan.

6. Dispositif de cellules de commutation selon l'une des revendications précédentes,
caractérisé en ce que
la surface des volets de détente de pression (5, 6, 14, 24, 25, 26) ne représente dans chaque cas qu'une partie de la surface supérieure des cellules (1, 2, 12, 21, 22, 23, 20).

7. Dispositif de cellules de commutation, destiné en particulier à des installations moyenne tension, comportant au moins une cellule (1) contenant un interrupteur, qui est fermée du côté supérieur par au moins un volet (5) de détente de pression monté de façon pivotante, en particulier selon l'une des revendications précédentes,
caractérisé en ce que
en plus des volets (5) de détente de pression, un autre volet (37) monté de façon pivotante est disposé du côté supérieur, en particulier sur une section (35) basse tension de la cellule (1), l'axe de pivotement (36) de ce volet (27) étant disposé de manière à être orienté vers l'extrémité libre (18) du volet (5) de détente de pression voisin, de façon telle que le volet (37) est soulevé par la succion (8) qui se produit dans le cas d'un déplacement affectant la cellule (1), et joue le rôle de volet déflecteur pour un arc électrique (11).

8. Dispositif de cellules de commutation selon la revendication 7,
caractérisé en ce que
le volet déflecteur (37) est disposé à un niveau plus élevé que le clapet (5) de détente de pression voisin.
